# EUROPÄISCHE PATENTSCHRIFT

(11) **EP 2 823 199 B1**
(45) Veröffentlichungstag und Bekanntmachung des Hinweises auf die Patenterteilung: **04.05.2016**
(21) Anmeldenummer: 13714236.0
(22) Anmeldetag: 22.03.2013
(51) Int. Cl.: F16H 57/033, F16D 1/072

(54) **GETRIEBEMOTORENBAUREIHE**
GEAR MOTOR SERIES
GAMME DE MOTEURS D'ENGRENAGE

(30) Priorität: 17.04.2012 EP 12164440
(43) Veröffentlichungstag der Anmeldung: 14.01.2015
(73) Patentinhaber: Siemens Aktiengesellschaft, 80333 München (DE)
(72) Erfinder: KUNERT, Jens, 72070 Tübingen (DE)
(86) Internationale Anmeldenummer: PCT/EP2013/056050
(87) Internationale Veröffentlichungsnummer: WO 2013/156248

(56) Entgegenhaltungen:
- EP-A1- 1 326 032
- WO-A1-99/06743
- WO-A1-03/100278
- WO-A1-2004/005763
- DE-A1- 19 637 361

## Beschreibung

Die vorliegende Erfindung betrifft eine Getriebemotorenbaureihe mit mehreren Motoren unterschiedlicher Motorbaugröße, die jeweils eine an ihrem freien Ende mit einer Aufnahmebohrung versehene Motorwelle aufweisen, wobei sich die Nenn-Außendurchmesser der Motorwellen der einzelnen Motorbaugrößen voneinander unterscheiden, und mit zumindest einem Einsteckritzel, das einen Ritzelzapfen aufweist, dessen Nenn-Außendurchmesser dem Nenn-Durchmesser einer der Aufnahmebohrungen entspricht, so dass das Einsteckritzel an der entsprechenden Motorwelle unter Nutzung eines Pressverbands fixierbar ist. Als Einsteckritzel wird dabei ein Verzahnungsteil bezeichnet, dessen Ritzelzapfen mittels eines Pressverbandes in der stirnseitig an der Motorwelle vorgesehenen Aufnahmebohrung montiert wird. Ein Einsteckritzel stellt somit die Kombination einer für die Getriebemotorbaureihe erforderlichen Verzahnung und eines zur Montage benötigten Zapfens in einem Bauteil dar. Ein wesentlicher Vorteil dieser Verbindungsart besteht darin, dass Verzahnungsteile angebaut werden können, die im Kopfkreisdurchmesser gleich oder sogar kleiner als der Nenn-Außendurchmesser des Motorwellenendes sind. Somit sind in der ersten motorseitigen Übersetzungsstufe sehr hohe Übersetzungen möglich.

Getriebemotorbaureihen der zuvor beschriebenen Art sind im Stand der Technik bereits bekannt, beispielsweise aus der gattungsbildenden WO 03/100278 A1 (SEW-Eurodrive), 04.12.2003. Eine sehr hohe Varianz der Übersetzungen je Getriebe wird grundsätzlich vor allem durch eine Vielzahl von Übersetzungen in der ersten motorseitigen Übersetzungsstufe erzielt. Zwischen- und Endstufen eines Getriebes weisen dagegen eine eher geringe Varianz auf. Die insgesamt benötigte Anzahl an Verzahnungsteilen wird somit vornehmlich durch die erste Stufe geprägt. Entsprechend weisen bekannte Getriebemotorenbaureihen für jede mit ihnen herstellbare Motorbaugröße mehrere Einsteckritzel auf, wobei die Auslegung der Nenn-Außendurchmesser der Ritzelzapfen und der Motorwellenzapfen stets unter Berücksichtigung des Nenn-Außendurchmessers der zugehörigen Motorwelle erfolgt, so dass Zapfen unterschiedlicher Motorbaugrößen normalerweise verschiedene Nenn-Außendurchmesser aufweisen. Aus diesem Grund ergeben sich Ausführungen, bei denen der gleichen Ritzelverzahnung mehrere Ritzelzapfen und/oder Aufnahmebohrungen zur Montage an Motorwellen unterschiedlicher Motorbaugrößen zuzuordnen sind, was zu einer entsprechend hohen Anzahl an Einsteckritzeln und/oder Aufsteckritzeln führt.

Ausgehend von diesem Stand der Technik ist es eine Aufgabe der vorliegenden Erfindung, eine Getriebemotorenbaureihe der eingangs genannten Art zu schaffen, die eine geringe Anzahl an Einzelkomponenten aufweist.

Zur Lösung dieser Aufgabe schafft die vorliegende Erfindung eine Getriebemotorenbaureihe mit mehreren Motoren unterschiedlicher Motorbaugröße, die jeweils eine an ihrem freien Ende mit einer Aufnahmebohrung versehene Motorwelle aufweisen, wobei sich die Nenn-Außendurchmesser der Motorwellen der einzelnen Motorbaugrößen voneinander unterscheiden, und mit zumindest einem Einsteckritzel, das einen Ritzelzapfen aufweist, dessen Nenn-Außendurchmesser dem Nenn-Durchmesser einer der Aufnahmebohrungen entspricht, so dass das Einsteckritzel an der entsprechenden Motorwelle unter Nutzung eines Pressverbandes fixierbar ist, dadurch gekennzeichnet, dass der Nenn-Durchmesser einer Aufnahmebohrung einer Motorwelle eines Motors einer ersten Motorbaugröße dem Nenn-Durchmesser einer Aufnahmebohrung einer Motorwelle eines Motors wenigstens einer anderen Motorbaugröße entspricht, so dass das zumindest eine Einsteckritzel an Motorwellen von Motoren verschiedener Motorbaugrößen unter Nutzung eines Pressverbands fixierbar ist. Mit anderen Worten wird bei dieser erfindungsgemäßen Getriebemotorenbaureihe die Anzahl der Komponenten dadurch reduziert, dass die Nenn-Durchmesser der stirnseitig an den Motorwellen vorgesehenen Aufnahmebohrungen derart gewählt sind, dass Einsteckritzel mit identischen Ritzelzapfen für Motoren unterschiedlicher Motorbaugrößen eingesetzt werden können. So sind beispielsweise für Motorwellen aufeinander folgender Motorbaugrößen Aufnahmebohrungen mit identischem Nenn-Durchmesser gewählt.

Gemäß einer Ausgestaltung der vorliegenden Erfindung sind die Nenn-Durchmesser der einander entsprechenden Aufnahmebohrungen derart gewählt, dass der Anteil der plastisch beanspruchten Ringfläche am gesamten Querschnitt des Außenteils des Pressverbands unabhängig von der Motorbaugröße stets kleiner oder gleich 0,3 ist. Mit anderen Worten soll gelten: q_{PA}/q_{A} ≤ 0,3, wobei q_{PA} die plastisch beanspruchte Ringfläche des Außenteils und q_{A} die Ringfläche des Außenteils ist. In Bezug auf die Berechnung wird auf die Berechnung von Pressverbänden gemäß DIN 7190 verwiesen.

Bevorzugt weist der Ritzelzapfen einen Nenn-Außendurchmesser auf, der eine für die ordnungsgemäße Übertragung des geforderten Drehmoments ausreichende Wellenfestigkeit gewährleistet. Mit anderen Worten ist der Nenn-Außendurchmesser des Ritzelzapfens bzw. des Wellenzapfens derart gewählt, dass einem Versagen durch die während des späteren Betriebs zu erwartenden Belastungen sicher entgegengewirkt wird. Zur Berechnung der Wellenfestigkeit wird auf die DIN 743 verwiesen.

Weitere Merkmale und Vorteile der vorliegenden Erfindung werden anhand der nachfolgenden Beschreibung einer Ausführungsform einer erfindungsgemäßen Getriebemotorenbaureihe unter Bezugnahme auf die beiliegende Zeichnung deutlich. Darin ist
- Figur 1: eine schematische Querschnittansicht einer Motorwelle einer ersten Motorbaugröße einer bekannten Getriebemotorenbaureihe mit daran montiertem Einsteckritzel;
- Figur 2: eine schematische Querschnittansicht einer Motorwelle einer weiteren Motorbaugröße der bekannten Getriebemotorenbaureihe mit daran montiertem Einsteckritzel;
- Figur 3: eine schematische Querschnittansicht einer Motorwelle einer ersten Motorbaugröße einer erfindungsgemäßen Getriebemotorenbaureihe mit daran montiertem Einsteckritzel;
- Figur 4: eine schematische Querschnittansicht einer Motorwelle einer weiteren Motorbaugröße der erfindungsgemäßen Getriebemotorenbaureihe mit daran montiertem Einsteckritzel;
- Figur 5: ein Diagramm, anhand dessen die erfindungsgemäße Getriebemotorenbaureihe erläutert wird; und
- Figur 6: ein Diagramm, anhand dessen der Unterschied zwischen der erfindungsgemäßen Getriebemotorenbaureihe und der bekannten Getriebemotorenbaureihe erläutert wird.

Nachfolgend wird der Aufbau einer erfindungsgemäßen Getriebemotorenbaureihe anhand eines Vergleiches mit einer bekannten Getriebemotorenbaureihe unter Bezugnahme auf die beiliegende Zeichnung erläutert.

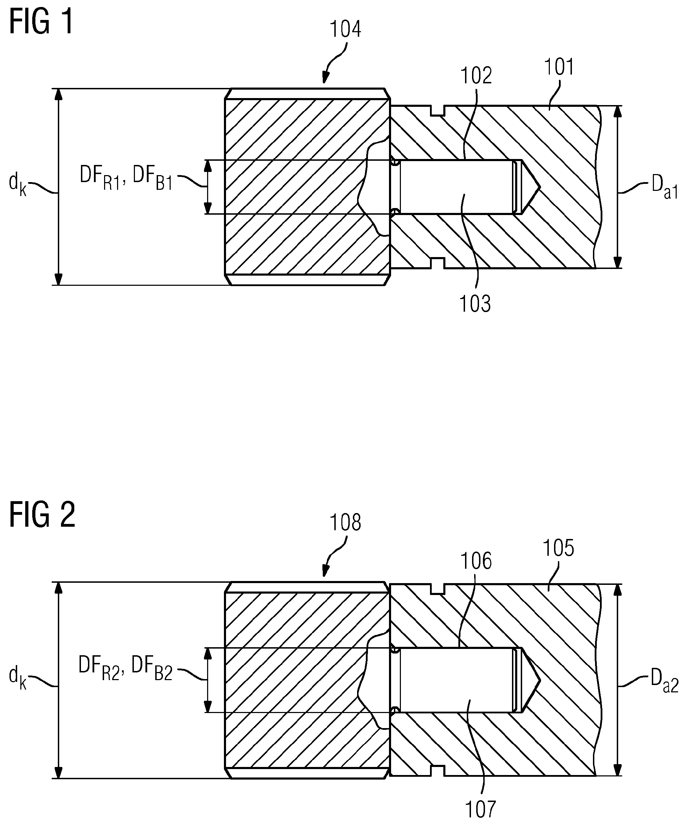

Die Figuren 1 und 2 zeigen schematische Querschnittansichten der Motorwellen der Motorbaugrößen 80 und 90 einer bekannten Getriebemotorenbaureihe mit daran montierten Einsteckritzeln.

Genauer gesagt zeigt Figur 1 eine Motorwelle 101 der Motorbaugröße 80, wobei die Motorwelle 101 einen Nenn-Außendurchmesser Dₐ₁ von 24,8 mm aufweist. Die Stirnfläche des freien Endes der Motorwelle 101 ist mit einer Aufnahmebohrung 102 versehen, die einen Nenn-Durchmesser DF_{B1} von 10 mm aufweist. In der Aufnahmebohrung 102 ist unter Nutzung eines Pressverbandes ein Ritzelzapfen 103 eines Einsteckritzels 104 fixiert, das die erste motorseitige Übersetzungsstufe eines Getriebes der bekannten Getriebemotorenbaureihe bildet. Der Ritzelzapfen 103 hat einen Nenn-Außendurchmesser DF_{R1'} der dem Nenn-Durchmesser DF_{B1} der Aufnahmebohrung 102 entspricht und somit ebenfalls 10 mm beträgt.

Figur 2 zeigt eine Motorwelle 105 der nächst größeren Motorbaugröße 90 der bekannten Getriebemotorenbaureihe, wobei die Motorwelle 105 einen Nenn-Außendurchmesser D_{A2} von 29,8 mm aufweist. Die Stirnseite des freien Endes der Motorwelle 105 ist mit einer Aufnahmebohrung 106 versehen, deren Nenn-Durchmesser DF_{B2} 12 mm beträgt. In der Aufnahmebohrung 106 ist unter Nutzung eines Pressverbands ein Ritzelzapfen 107 eines Einsteckritzels 108 fixiert, dessen Kopfkreisdurchmesser dₖ demjenigen des Einsteckritzels 104 entspricht. Der Nenn-Durchmesser DF_{F2} des Ritzelzapfens 107 entspricht dem Nenn-Durchmesser DF_{B2} der Aufnahmebohrung 106 und beträgt damit ebenfalls 12 mm.

Obwohl die Verzahnungen der Einsteckritzel 104 und 108 identisch sind, sind bei der bekannten Baureihe für die Motorbaugrößen 80 und 90 aufgrund der unterschiedlichen Nenn-Durchmesser der Ritzelzapfen 103 und 107 also separate Ritzelzapfen erforderlich, da die Nenn-Durchmesser DF_{B1} und DF_{B2} der Aufnahmebohrungen 102 und 106 in Bezug eine optimale Übertragungsfähigkeit der Pressverbindung gemäß DIN 7190 jeweils in Einzelbetrachtung an die verschiedenen Nenn-Außendurchmesser Dₐ₁ und Dₐ₂ der Motorwellen 101 und 105 angepasst sind. Mit anderen Worten wurden die Nenn-Durchmesser DF_{B1} und DF_{B2} jeweils im Rahmen einer Einzelberechnung nach DIN 7190 zur Erzielung eines optimierten Pressverbunds getrennt voneinander ermittelt.

Der vorliegenden Erfindung liegt nun der Gedanke zugrunde, dass die separate Zuordnung der Einsteckritzelzapfen 103 und 107 zur jeweiligen Motorbaugröße bei Getriebemotorenbaureihen zur Erzielung eines zuverlässigen Pressverbands nicht zwingend erforderlich ist. Vielmehr lassen sich bestimmte Motorbaugrößen zu Gruppen zusammenfassen, bei denen jeweils die Anwendung nur einer einzigen, gemeinsamen Zapfengeometrie gelingt.

Dies wird bei Einsteckritzeln erreicht, wenn beim größeren Motor einer Gruppe der gewählte maximal zulässige Anteil der plastisch beanspruchten Ringfläche q_{PA} am gesamten Querschnitt q_{A} gemäß DIN 7190 nicht voll ausgenutzt wird. Typischerweise wird dies durch ein Grenzverhältnis q_{PA}/q_{A} kleiner 0,3 gekennzeichnet. Entsprechend kleinere Motoren weisen demnach dann eine höhere Ausnutzung des gesetzten Grenzverhältnisses auf. Dabei wird zunächst von einem konstanten Übermaß ausgegangen. Ebenso kann auch eine Toleranzänderung der Motorwellenbohrung angewendet werden. Die kleineren Motoren einer Gruppe erzeugen in der Regel weniger Drehmoment, so dass eine entsprechend geringere Überdeckung hinreichend ist. Somit können gleiche Ritzelzapfendurchmesser in einer Motorengruppe auch realisiert werden, wenn beim höchst ausgelasteten Motor der zur Verfügung stehende Plastizitätsdurchmesser bereits ausgenutzt wurde.

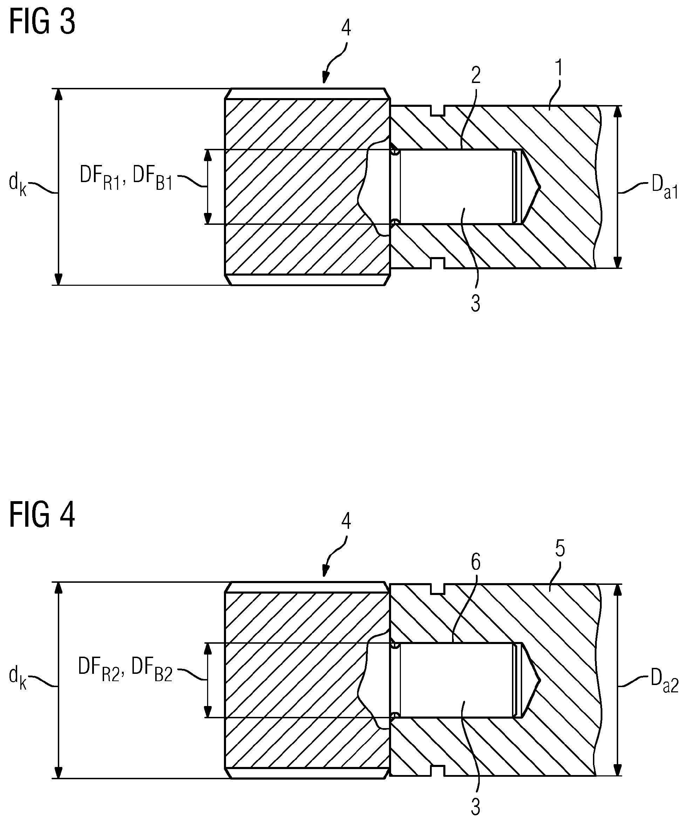

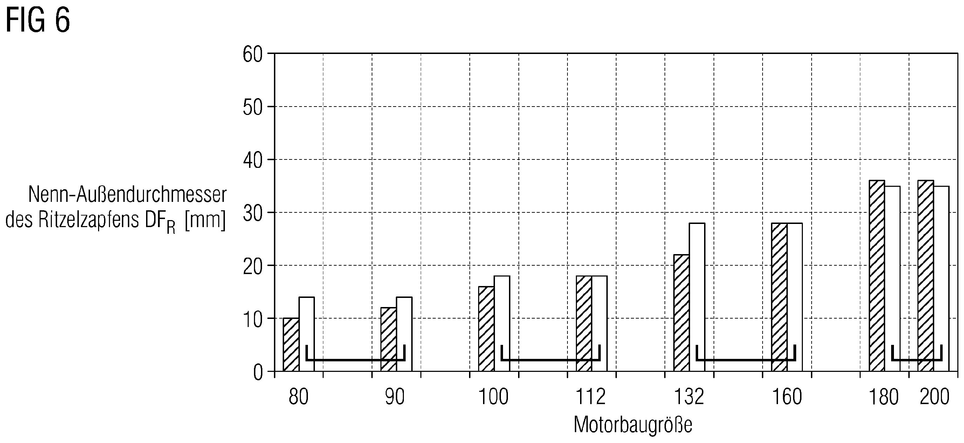

Veranschaulicht wird dies nachfolgend anhand der Figuren 3 bis 5, die sich auf eine Getriebemotorenbaureihe gemäß einer Ausführungsform der vorliegenden Erfindung beziehen, sowie anhand Figur 6, welche die bekannte Getriebemotorenbaureihe und die erfindungsgemäße Getriebemotorenbaureihe einander gegenüberstellt.

Figur 3 zeigt eine Motorwelle 1 der Motorbaugröße 80 der erfindungsgemäßen Getriebemotorenbaureihe, wobei der Nenn-Außendurchmesser Dₐ₁ der Motorwelle 1 analog zu dem in Figur 1 dargestellten bekannten Beispiel 24,8 mm beträgt. Die Motorwelle 1 ist an ihrem freien Ende stirnseitig mit einer Aufnahmebohrung 2 versehen, die einen Nenn-Durchmesser DF_{B1} von 14 mm aufweist und somit größer als der Nenn-Durchmesser DF_{B1} der in Figur 1 dargestellten Aufnahmebohrung 102 gewählt ist. In die Aufnahmebohrung 2 ist ein Ritzelzapfen 3 eines Einsteckritzels 4 unter Nutzung eines Pressverbands fixiert, wobei der Nenn-Durchmesser DF_{R1} des Ritzelzapfens 3 dem Nenn-Durchmesser DF_{B1} der Aufnahmebohrung 2 entspricht und somit ebenfalls 14 mm beträgt. Der Anteil der plastisch beanspruchten Ringfläche am gesamten Querschnitt des gesamten Außenteils des Pressverbands q_{PA}/q_{A} beträgt abhängig von den gewählten Übermaßen im Beispiel, berechnet gemäß DIN 7190, im vorliegenden Fall 0,295. Damit ist er kleiner als 0,3 und entsprechend (gerade noch) zulässig.

Figur 4 zeigt eine Motorwelle 5 der nächst größeren Motorbaugröße 90 der erfindungsgemäßen Getriebemotorenbaureihe, wobei der Nenn-Außendurchmesser Dₐ₂ der Motorwelle 5 29,8 mm beträgt und somit dem Nenn-Außendurchmesser Dₐ₂ der in Figur 2 dargestellten Motorwelle 105 der bekannten Getriebemotorenbaureihe entspricht. Das freie Ende der Motorwelle 5 ist stirnseitig mit einer Aufnahmebohrung 6 versehen, die einen Nenn-Durchmesser DF_{B2} von 14 mm aufweist und somit dem Nenn-Durchmesser DF_{B1} der Aufnahmebohrung 2 der in Figur 3 dargestellten Motorwelle 1 der Motorbaugröße 80 entspricht. In der Aufnahmebohrung 6 ist ein Ritzelzapfen 3 eines Einsteckritzels 4 unter Nutzung eines Pressverbands montiert. Der Nenn-Außendurchmesser DF_{R2} des Einsteckritzels 8 entspricht dem Nenn-Durchmesser DF_{B2} und beträgt somit ebenfalls 14 mm. Für den Anteil der plastisch beanspruchten Ringfläche am gesamten Querschnitt des Außenteils des Pressverbands ergibt sich mit den gleichen wie oben gewählten Übermaßen im Beispiel ein Wert von 0,179, der ebenfalls kleiner als 0,3 und damit zulässig ist.

Aufgrund der Tatsache, dass die Nenn-Durchmesser DF_{R1'} DF_{R2}, DF_{B1} und DF_{B2} bei der erfindungsgemäßen Getriebemotorenbaureihe für die Motorbaugrößen 80 und 90 identisch gewählt sind, können für die Motorbaugrößen 80 und 90 Einsteckritzel 4 mit identischen Ritzelzapfen 3 verwendet werden, wodurch die Anzahl der Bauteile gegenüber den Motorbaugrößen 80 und 90 der bekannten Getriebemotorenbaureihe verringert werden kann. Dies führt zu erheblichen Kosteneinsparungen.

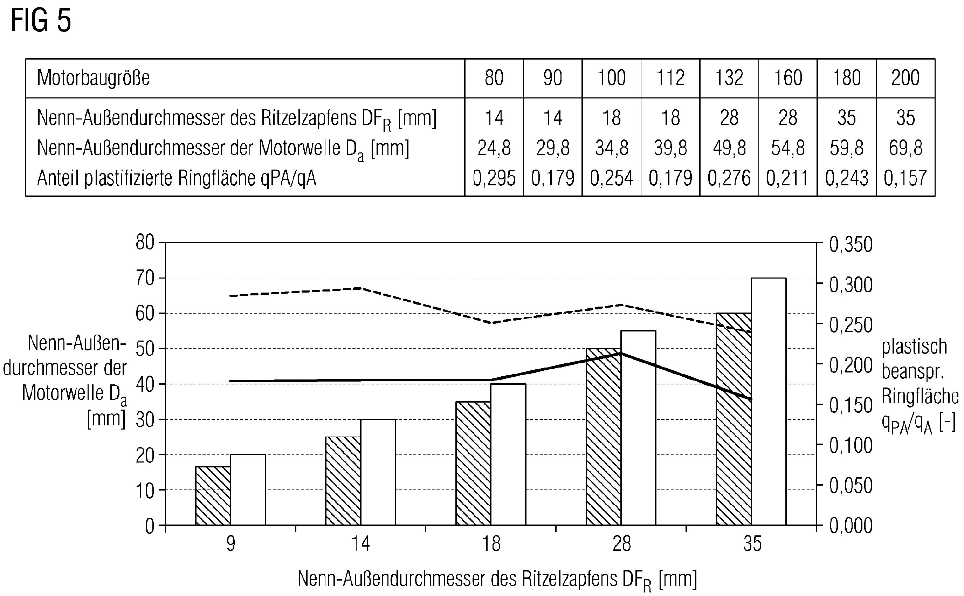

In gleicher Weise sind, wie es anhand von Figur 5 gezeigt ist, die Einsteckritzel für die Motorbaugrößen 100 und 112, 132 und 160 sowie 180 und 200 zusammengefasst. In Figur 5 repräsentieren die schraffierten Balken den jeweils kleineren Motor zweier zusammengefasster Motorbaugrößen, die nicht schraffierten Balken den größeren Motor zweier zusammengefasster Motorbaugrößen, die gestrichelte Linie den Anteil der plastisch beanspruchten Ringfläche am gesamten Querschnitt des Außenteils des Pressverbands q_{PA/}q_{A} des kleineren Motors zweier zusammengefasster Motorbaugrößen und die durchgezogene Linie den Wert für qp_{A}/q_{A} für den größeren Motor zweier zusammengefasster Motorbaugrößen.

Figur 6 zeigt eine direkte Gegenüberstellung der Nenn-Außendurchmesser DF_{R} der Ritzelzapfen der Einsteckritzel der in den Figuren 1 und 2 dargestellten bekannten Getriebemotorenbaureihe für die Motorbaugrößen 80, 90, 100, 112, 132, 160, 180 und 200 und der Nenn-Außendurchmesser DF_{R} der Ritzelzapfen der Einsteckritzel der in den Figuren 3 und 4 dargestellten bekannten Getriebemotorenbaureihe für dieselben Motorbaugrößen. Die schraffierten Balken repräsentieren in der Graphik die Nenn-Außendurchmesser DF_{R} der Ritzelzapfen der Einsteckritzel der bekannten Getriebemotorenbaureihe, und die nicht schraffierten Balken die Nenn-Außendurchmesser DF_{R} der Ritzelzapfen der Einsteckritzel der erfindungsgemäßen Getriebemotorenbaureihe. Es ist zu erkennen, dass bei der erfindungsgemäßen Getriebemotorenbaureihe für jede Motorbaugröße ein Einsteckritzel gegenüber der bekannten Getriebemotorenbaureihe eingespart ist.

## Patentansprüche

1. Getriebemotorenbaureihe mit mehreren Motoren unterschiedlicher Motorbaugröße, die jeweils eine an ihrem freien Ende mit einer Aufnahmebohrung (2, 6) versehene Motorwelle (1, 5) aufweisen, wobei sich die Nenn-Außendurchmesser (Dₐ) der Motorwellen (1) der einzelnen Motorbaugrößen voneinander unterscheiden, und mit zumindest einem Einsteckritzel (4), das einen Ritzelzapfen (3) aufweist, dessen Nenn-Außendurchmesser (DF_{F}) dem Nenn-Durchmesser (DF_{B}) einer der Aufnahmebohrungen (2, 6) entspricht, so dass das Einsteckritzel (4) an der entsprechenden Motorwelle (1, 5) unter Nutzung eines Pressverbandes fixierbar ist, **dadurch gekennzeichnet, dass** der Nenn-Durchmesser (DF_{B1}) einer Aufnahmebohrung (2) einer Motorwelle (1) eines Motors einer ersten Motorbaugröße dem Nenn-Durchmesser (DF_{B2}) einer Aufnahmebohrung (6) einer Motorwelle (5) eines Motors wenigstens einer anderen Motorbaugröße entspricht, so dass das zumindest eine Einsteckritzel (4) an Motorwellen (1, 5) von Motoren verschiedener Motorbaugrößen unter Nutzung eines Pressverbands fixierbar ist.

2. Getriebemotorenbaureihe nach Anspruch 1, **dadurch gekennzeichnet, dass** die Nenn-Durchmesser (DF_{B}) der einander entsprechenden Aufnahmebohrungen (2, 6) derart gewählt sind, dass der Anteil der plastisch beanspruchten Ringfläche (q_{PA}/q_{A}) am gesamten Querschnitt des Außenteils des Pressverbands unabhängig von der Motorbaugröße stets kleiner oder gleich 0,3 ist.

3. Getriebemotorenbaureihe nach einem der vorhergehenden Ansprüche, **dadurch gekennzeichnet, dass** der Ritzelzapfen (4) einen Nenn-Außendurchmesser (DF_{R}) aufweist, der eine für die ordnungsgemäße Übertragung des geforderten Drehmoments ausreichende Wellenfestigkeit gewährleistet.

## Claims

1. Geared motor series comprising a plurality of motors with different dimensions, which respectively comprise a motor shaft (1, 5) provided with a receiving bore (2, 6) on the free end thereof, wherein the nominal external diameters (Dₐ) of the motor shafts (1) of the individual motor dimensions are different from each other, and also comprising at least one plug-in pinion (4) which comprises a pinion journal (3), the nominal external diameter (DF_{R}) matching the nominal diameter (DF_{B}) of one of the receiving bores (2, 6), such that the plug-in pinion (4) can be fixed to the corresponding motor shaft (1, 5) using a press assembly, **characterised in that** the nominal diameter (DF_{B1}) of a receiving bore (2) of a motor shaft (1) of a motor with a first motor dimension matches the nominal diameter (DF_{B2}) of a receiving bore (6) of a motor shaft (5) of a motor with at least one other motor dimension, such that the at least one plug-in pinion (4) can be fixed to motor shafts (1, 5) of motors having different dimensions using a press assembly.

2. Geared motor series according to claim 1, **characterised in that** the nominal diameter (DF_{B}) of the mutually corresponding receiving bores (2, 6) are selected in such a way that the portion of plastically stressed annular surface (q_{PA}/q_{A}) of the overall cross-section of the outer part of the press assembly is always less than or equal to 0.3 irrespective of the motor dimension.

3. Geared motor series according to one of the preceding claims, **characterised in that** the pinion journal (4) has a nominal external diameter (DF_{R}) which ensures a shaft strength sufficient for proper transmission of the required torque.

## Revendications

1. Gamme de motoréducteurs qui comprend plusieurs moteurs de dimensions de construction différentes, qui ont respectivement un arbre ( 1, 5 ) pourvu d'un logement ( 2, 6 ) à son bout libre, les diamètres ( Dₐ ) extérieurs nominaux des arbres ( 1 ) des diverses dimensions de construction des moteurs étant différents les uns des autres et comprenant au moins un pignon ( 4 ) d'emmanchage, qui a un tourillon ( 3 ) dont le diamètre ( DF_{R} ) extérieur nominal correspond au diamètre ( DF_{B} ) nominal de l'un des logements ( 2, 6 ) de manière à pouvoir immobiliser le pignon ( 4 ) d'emmanchage sur l'arbre ( 1, 5 ) du moteur correspondant en utilisant un ajustement serré, **caractérisé en ce que** le diamètre ( DF,1 ) nominal d'un logement ( 2 ) d'un arbre ( 1 ) d'un moteur d'une première dimension de construction correspond au diamètre ( DF_{B2} ) nominal d'un logement ( 6 ) d'un arbre ( 5 ) d'un moteur d'une autre dimension de construction, de manière à pouvoir immobiliser le au moins un pignon ( 4 ) d'emmanchage sur des arbres ( 1, 5 ) de moteurs de dimensions de construction différentes en utilisant un ajustement serré.

2. Gamme de motoréducteurs, suivant la revendication 1, **caractérisé en ce que** les diamètres ( DF_{B} ) nominaux des logements ( 2, 6 ) se correspondant les uns aux autres sont choisis, de manière à ce que la proportion de la surface ( q_{PA}/q_{A} ) annulaire contrainte plastiquement à la section transversale totale de la partie extérieure de l'ajustement serré soit toujours, indépendamment de la dimension de construction du moteur, inférieure ou égale à 0,3.

3. Gamme de motoréducteurs, suivant l'une des revendications précédentes, **caractérisé en ce que** le tourillon ( 4 ) du pignon a un diamètre ( DF_{R} ) extérieur nominal qui assure une rigidité d'arbre suffisante pour la bonne transmission du couple exigé.
